# EUROPEAN PATENT APPLICATION

(11) **EP 0 742 347 A2**
(43) Date of publication of application: **13.11.1996**
(21) Application number: 96302813.9
(22) Date of filing: 22.04.1996
(51) Int. Cl.: F01D 5/18

(54) **Turbine blade cooling**

(30) Priority: 10.05.1995 US 438376
(71) Applicant: ALLISON ENGINE COMPANY, INC., Indianapolis, Indiana 46206-0420 (US)
(72) Inventor: Ames, Forrest Edward, Indianapolis, Indiana 46214 (US); O'Connor, Kurt Francis, Carmel, Indiana 46033 (US); Stewart, James Ray, Danville, Indiana 46122 (US)
(74) Representative: Holmes, Matthew Peter

(57) **Abstract**

A turbine blade utilizing cooling media for internally cooling the blade and to provide film cooling protection on its outer surface to reduce the surface heat load on the blade. The turbine blade having a central pathway for distributing the cooling media to a plurality of cooling jackets positioned along the perimeter of the blade adjacent the interior surface. The cooling jackets having exit apertures inclined at an acute angle to the outer surface for enhancing the delivery and characteristics of the cooling media to promote film cooling protection. Each of the cooling jackets having a plurality of cooling pedestals therein for increasing the convective heat transfer between the blade and the cooling media without significantly altering the cooling media flow. Further, at least one of the cooling jackets having the exit apertures located closer than the cooling media entrance apertures to the leading edge of the airfoil. This relationship between the exit apertures and the cooling media entrance apertures of the cooling jacket provides for the flow of cooling media counter to the flow of fluid on the outer surface of the blade.

## Description

### BACKGROUND OF THE INVENTION

The present invention relates generally to the cooling of jet engine components having surfaces exposed to the flow of high temperature gas. More particularly, in one embodiment the present invention defines a turbine vane or blade having internal passageways and exit holes for the passage of cooling media necessary for cooling the turbine blade. Although the present invention was developed for use in a gas turbine engine, certain applications may be outside of this field.

A gas turbine engine is typical of turbo machinery in which the concept described herein may be advantageously employed. It is well known that a gas turbine engine conventionally comprises an axial flow compressor for compressing air to the proper pressure required for supporting combustion of fuel in a combustion chamber. The high temperature exhaust gas exiting the combustion chamber provides the working fluid for the turbine, which powers the axial flow compressor. A power turbine that is driven by the flow of high temperature gas is utilized to turn a propeller, fan or other device. Further, the high temperature gas may be used directly as a thrust for providing motive power, such as in a turbine jet engine.

It is well known that the performance of gas turbine engines increases with the increase in the operating temperature of the flow of high temperature gas from the combustion chamber. A factor limiting the allowable temperature of the gaseous working flow from the combustion chamber is the capability of the various engine components to not degrade when exposed to the high temperature gas flow. Various techniques have been utilized by engine designers to cool the engine components in order to increase the upper limit on the operating temperature of the gaseous working fluid.

A conventional technique, film cooling has been widely utilized to minimize the degradation of the gas turbine engine components exposed to the flow of high temperature gases. Film cooling generally refers to a technique of cooling an external surface of the component that is being heated by the high temperature gas, and involves injecting a relatively cool media, such as air along the component's external surface. The cooling media, moving sufficiently slowly along the external surface of the component, functions as an insulating layer to reduce the unwanted heating of the external surface of the component by the flow of high temperature gas. A second conventional technique that engine designers have used to allow the use of higher temperature working gases is an internal network of apertures and passageways within the component. A steady flow of pressurized cooling media is passed through the internal passageways of the component, and the cooling media is finally exhausted onto the exterior surface of the component. The passage of the cooling media through the internal passageways and out through the exit aperture provides for convective heat transfer from the walls of the component to the cooling media.

Cooling of the components of the gas turbine engine is preferably accomplished with a minimum amount of cooling media, since the cooling media is working fluid which has been extracted from the compressor and its loss from the gas flow rapidly reduces engine efficiency. The engine designer must design an engine to operate within a specified temperature range, while minimizing the amount of cooling media extracted from the compressor. If these design parameters are not satisfied, a corresponding structural degradation of the engine components may result, or the efficiency of the engine may be reduced because an excessive quantity of cooling media was extracted from the compressor.

Although the prior techniques utilizing internal passageways, exit apertures, and film cooling are steps in the right direction for cooling components exposed to high temperature gases, the need for additional improvement still remains. The present invention satisfies this need in a novel and unobvious way.

### SUMMARY OF THE INVENTION

One form of the present invention contemplates a fluid cooled airfoil. The apparatus contemplates an airfoil within a gas turbine engine, comprising: a body, the body having an internal passageway for distributing cooling media within the body, and the body having an inner surface and an outer surface; a plurality of cooling jackets, the plurality of cooling jackets being disposed adjacent the inner surface of the body for receiving at least a portion of the the cooling media therein, at least one of the cooling jackets directing the flow of cooling media therein counter to the fluid flow on the exterior surface of the body; an exit aperture connecting with at least one of the cooling jackets for allowing the escape of the cooling media from the cooling jacket to the exterior surface of the body; and at least one of the cooling jackets having a plurality of pedestals positioned therein for enhancing heat transfer between the body and the cooling media.

One object of the present invention is to provide an improved airfoil for a gas turbine engine.

Related objects and advantages of the present invention will be apparent from the following description.

### BRIEF DESCRIPTION OF THE DRAWINGS

FIG. 1 is a side elevational view of a gas turbine engine using the present invention.

FIG. 2 is a perspective view of a turbine blade comprising a portion of the FIG. 1 gas turbine engine according to one form of the present invention

FIG. 3 is a partial rear side elevational view of the turbine blade of FIG. 2.

FIG. 4 is an illustrative top sectional view of an airfoil according to one form of the present invention.

FIG. 5 is an enlarged side elevational view of the cooling pedestals comprising a portion of the FIG. 2 gas turbine blade.

FIG. 6 is an illustrative top sectional view of an airfoil according to a second form of the present invention.

FIG. 7 is an enlarged illustrative plan view of the cooling pedestals within a cooling jacket which comprises a portion of the FIG. 2 turbine blade.

FIG. 8 is an enlarged illustrative plan view of the cooling pedestals within a cooling jacket which comprises a portion of the turbine blade according to another form of the present invention.

FIG. 9 is an enlarged side elevational view of the exit apertures comprising a portion of the FIG. 2 gas turbine blade.

### DESCRIPTION OF THE PREFERRED EMDODIMENT

For the purposes of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates.

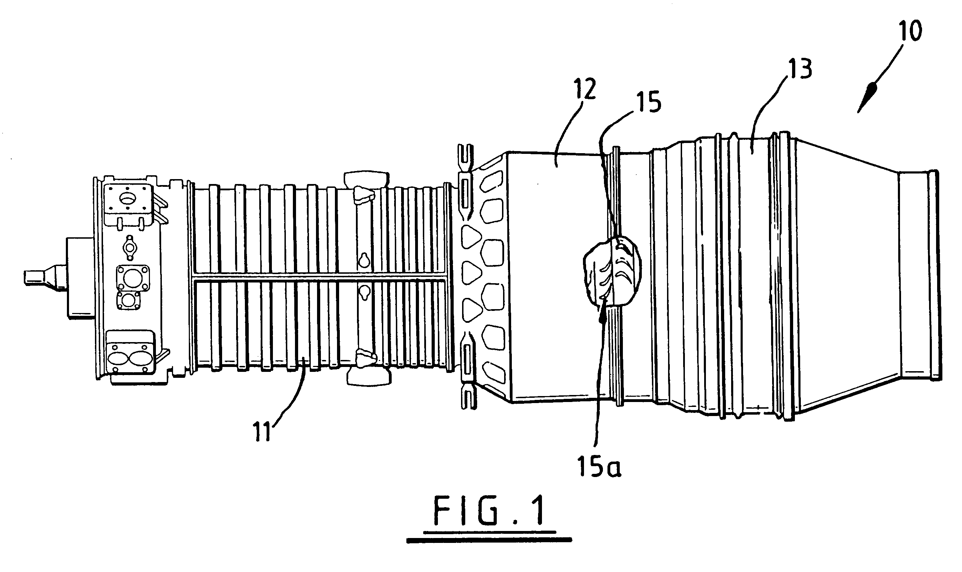

Referring to FIG. 1 there is illustrated a gas turbine engine 10 which includes a compressor 11, a combustor 12, and a power turbine 13. The three components have been integrated together to produce an aircraft flight propulsion engine. One aircraft engine of this general type is model AE2100, that is produced by Allison Engine Company, Inc. of Indianapolis, Indiana. It is important to realize that there are a multitude of ways in which the components can be linked together. Additional compressors and turbines could be added with intercoolers connecting between the compressors and reheat combustion chambers could be added between the turbines. Further, the gas turbine engine is equally suited to be used for industrial applications. Historically, there has been widespread application of industrial gas turbine engines, such as pumping sets for gas and oil transmission lines, electricity generation, and naval propulsion.

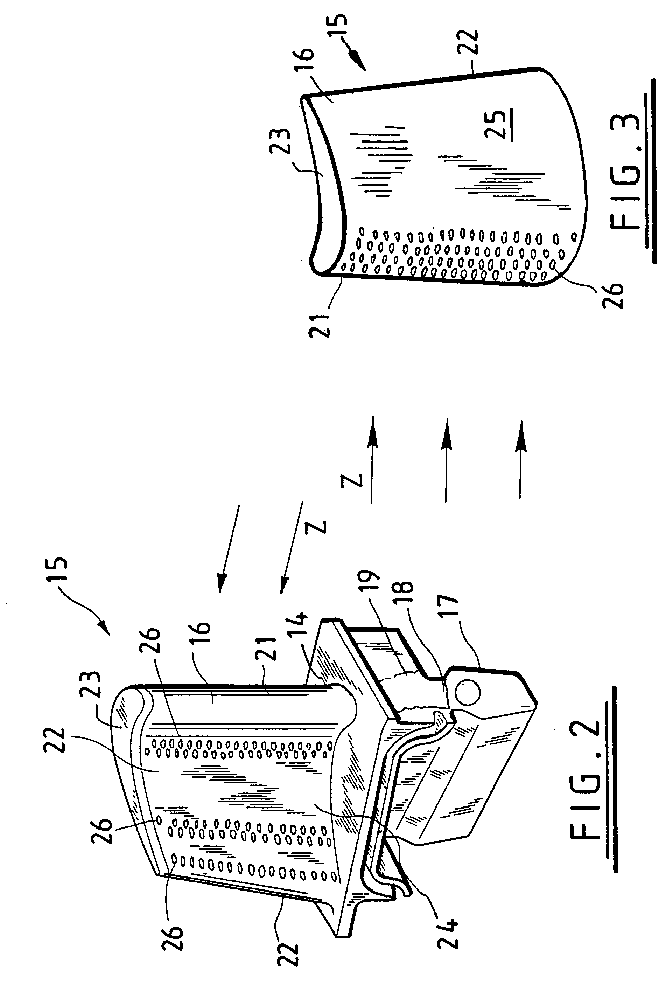

With reference to FIGS. 2 and 3, there is illustrated an enlarged view of the gas turbine blade 15. The turbine blade 15 is mounted to a disk that is affixed to a tubular shaft within the gas turbine engine 10. A turbine vane 15a forms a portion of a nozzle within the gas turbine engine. In the preferred embodiment the gas turbine blade 15 and vane 15a are unitary cast alloy structures produced by a precision casting operation utilizing various super alloy compositions. Various types of super alloy compositions and manufacturers of such compositions are known to those skilled in the art. Most super alloy compositions of interest are complicated mixtures of nickel, chromium, aluminum and other select elements. One technique for producing a cast unitary turbine blade 15 or vane 15a having equiaxed, directionally solidified, and single crystal alloy structures as disclosed in U.S. Patent No. 5,295,530 to O'Connor, which is incorporated by reference herein. In the preferred embodiment the gas turbine blade 15 and vane 15a are of a single crystal alloy structure. It is understood that a gas turbine blade and a gas turbine vane are often referred to as an airfoil. Alternatively, the gas turbine blade 15 and vane 15a of the present invention could be produced in a conventional cast structure or by the assembly of multiple subcomponents.

The gas turbine blade 15 has as principal regions an airfoil 16, a root 17 and a shank 18 which extends between the root and the airfoil 16. In the preferred embodiment the gas turbine blade 15 is of an integral form. The shank 18 has a central conduit 19 formed therein which is in fluid communication with a hollow cavity or passageway 20 of the airfoil 16. The hollow cavity 20 functions as an internal passageway for receiving cooling media from the compressor 11 and distributing it within the blade 15. The cooling media in the preferred embodiment is a compressible fluid such as air. The airfoil 16 has a leading edge 21 that faces in an upstream direction with respect to the approaching fluid flow (indicated by arrow Z), and a trailing edge 22 facing in a downstream direction. The airfoil 16 has a tip 23 which is opposed when installed in a gas turbine engine 10 by an outer shroud, which is not illustrated.

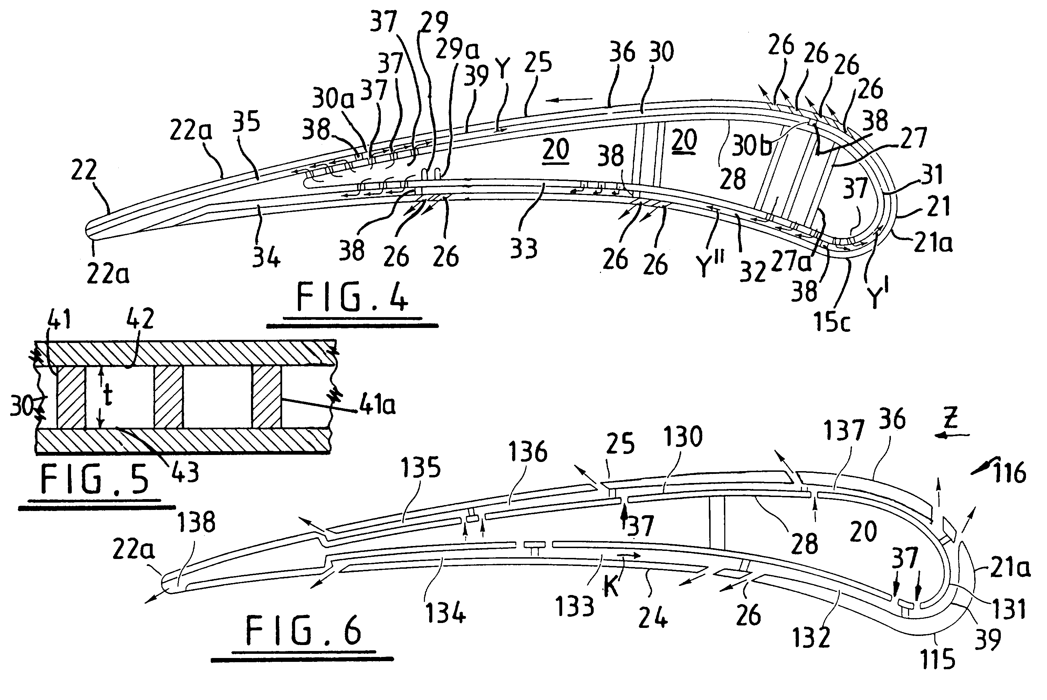

The airfoil 16 includes a concave pressure side 24 and a convex suction side 25. A plurality of cooling media exit apertures 26 are formed in the airfoil 16. The cooling media exit apertures 26 are formed on the pressure side 24, suction side 25 and the leading edge 21 of the airfoil 16. With reference to FIGS. 4 and 6, there are illustrated two forms of the internal passages for couling media flow within the airfoil 16. While the internal passages are specifically referred to as relating to a turbine blade they are equally applicable to a gas turbine vane.

The preferred embodiment of airfoil 16 with intricate internal passages for the flow of cooling media is illustrated in FIG. 4. A plurality of substantially cylindrical rods 27 extend across at least a portion of the cooling cavity 20. The rods 27 being solid and integrally formed with an interior surface 28 of the gas turbine blade 15. In an alternate form of the present invention the rods are independent and not integrally formed with the airfoil 16. The rods 27 are disposed within the cooling cavity 20 such that the cooling media passes around their exterior surface 27a and preferably increases the convective heat transfer between the cooling media and the turbine blade 15. The rods 27 provide a conductive connection between surfaces within the airfoil, and enhance conductive heat transfer across the airfoil. Further, rods 27 provide added structural rigidity for the airfoil 16. More specifically, the rods 27 prevent the airfoil structure from ballooning under the forces exerted by the high pressure cooling media.

In the preferred embodiment the plurality of rods 27 are in aligned rows extending spanwise within the cooling cavity 20, and the rows of rods are spaced streamwise within the cavity 20. The use of the term spanwise is used herein to indicate an orientation between the tip 23 and a platform 14, and the term streamwise is used herein to indicate the orientation between the leading end 21a and the trailing end 22a. Further, a plurality of foreshortened rods 29 are disposed within the hollow cavity 20; with only one end 29a of rod 29 being integrally connected to the interior surface 28. The foreshortened rods 29 are in aligned rows extending spanwise within cooling cavity 20, and the rows of rods are spaced streamwise within the cavity 20. In an alternative embodiment the rods 27 and 29 are variably positioned within the airfoil 16. In another form of the present invention variable length cooling rods are used, which allow for the enhancement of localized heat transfer in select regions of the airfoil.

In one embodiment of the present invention the airfoil 16 has a streamwise and spanwise length in the range of about one inch to four inches. In the preferred embodiment the airfoil 16 has a corresponding streamwise length of about 1.9 inches and a spanwise length of about 1.1 inches. It is understood that other spanwise and streamwise lengths are contemplated in the present invention.

In the preferred embodiment the airfoil 16 has six (6) cooling jackets or passages 30-35 formed along the perimeter of the airfoil 16 and located between the outer surface 36 and the interior surface 28 of the airfoil 16. The six cooling jackets 30-35 are separated by flow splitter 38, which prevent cooling media from communication between the adjoining cooling jackets. In one alternate embodiment of the present invention the six cooling jackets are separated by flow splitters which restrict the flow of cooling media between the adjacent cooling jackets. More specifically, there are gaps in the flow splitters along the spanwise direction and the alternate embodiment is designed such that there is no significant pressure differential across the flow splitters. The minimal pressure differential across the flow splitters insures that the media flowing in the cooling jacket is not substantially altered by the passage of fluid between adjacent cooling jackets. The six cooling jackets 30-35 extend spanwise from the tip 23 to the platform 14 of airfoil 16. A first cooling jacket 30 is located on the suction side 25 of airfoil 16 between the outer surface 36 and the interior surface 28. The first cooling jacket 30 includes a plurality of cooling media entrance apertures 37 for allowing the passage of at least a portion of the cooling media from the hollow cavity 20 into the first cooling jacket 30.

Cooling media entrance apertures 37 are spaced streamwise along a portion of the interior surface 28 of airfoil 16, and the plurality of apertures 37 extend in aligned rows spanwise along the airfoil 16. The preferred embodiment having three rows of entrance apertures 37 formed in first cooling jacket 30. It is understood that the number of rows of entrance apertures 37 is based on the flow requirement and heat load in a specific area. In alternate forms of the present invention the number of rows of entrance apertures varies depending upon the above parameters. In the preferred embodiment the entrance apertures 37 have a circular cross section and are formed transverse to the interior surface 28 of the airfoil 16; therefore the cooling media is injected into the first cooling jacket 30 substantially transverse to the flow of cooling media within the cooling jacket. A flow splitter 38, formed at each streamwise end 30a and 30b of the first cooling jacket 30, prevents the flow of cooling media between the adjacent second and sixth cooling jackets 31 and 35. Flow splitters 38 are integrally formed with the airfoil 16 and extend spanwise from the tip 23 to the platform 14.

Cooling media flow (indicated by arrow Y) within the first cooling jacket 30 is substantially counter to the flow of fluid on the outer surface 36 (indicated by arrow Z) of the airfoil 16. In the preferred embodiment the cooling media is air that has been extracted from the compressor 11, and the fluid flowing over the exterior surface 36 of airfoil 16 is also air. A plurality of exit apertures 26 are formed closer than the cooling media entrance apertures 37 to the leading end 21a of the airfoil 16. The relative position between the exit apertures 26 and cooling media entrance apertures 37 provide for the counter flow of cooling media within the airfoil 16.

Counter flow refers to the cooling media flowing through the cooling jacket 30 in a direction substantially counter to the direction of fluid flow on the exterior surface 36 of airfoil 16. At the location proximate the entrance apertures 37 of the first cooling jacket 30 the cooling media has its minimum temperature, and a wall 39 has its maximum adiabatic wall temperature to surface temperature difference. The film cooling protection along the outer surface 36 adjacent the first cooling jacket 30 decreases streamwise from the exit apertures 26 to a position adjacent the entrance apertures 37. The counter flow of cooling media insures that in the first cooling jacket 30 the maximum temperature differential between the wall 39 arid the cooling media occurs at the location adjacent the cooling media entrance apertures 37. At this location the outer surface 36 adjacent the first cooling jacket 30 has the most dissipated film cooling protection, in contrast the maximum film cooling protection is available downstream of the exit apertures 26 where the temperature differential between the cooling media and the wall 39 is the smallest. It should be apparent that it is desirable to inject the cooling media into the first cooling jacket 30 downstream from the exit apertures 26 that it feeds.

In the preferred embodiment there are a plurality of pedestals 41 formed within the first cooling jacket 30 for enhancing the heat transfer between the airfoil 16 and the cooling media. The plurality of pedestals 41 being conductively connected between a first surface 42 and a second surface 43 of the cooling jacket 30. The pedestals having a width, which herein is defined as its maximum dimension in a plane substantially parallel to either the first surface 42 or the second surface 43. It is understood that cooling jackets can be produced with or without cooling pedestals therein depending upon design parameters such as heat transfer requirements, pressure drip requirements, etc.

In another form of the present invention at least a portion of the plurality of pedestals 41 are elongated in a streamwise direction. The variation of streamwise length of the cooling pedestals 41 allows for a corresponding change in the streamwise heat transfer coefficient. In one embodiment of the present invention the cooling pedestals 41 that are located proximate an inlet aperture 37 have been elongated in a streamwise direction. The degree of elongation for the cooling pedestals 41 will depend upon local cooling requirements in the airfoil. Generally, in this form of the invention as we move streamwise from a cooling aperture 37 to an exit aperture 26 the streamwise lenght of the cooling pedestals varies. More particularly, the cooling pedestals located closer to the exit apertures 26 have a shorter streamwise length than the cooling pedestals located proximate the inlet apertures. It is understood that the streamwise length of the pedestals is being varied to compensate for the heat transfer requirements in the cooling jacket. It is understood that the streamwise elongation of the pedestals can be varied to the point where the pedestal streamwise length can be all or a large fraction of the streamwise length of the internal cooling passage.

In another embodiment the cooling jacket is divided into a plurality of streamwise passageways, where the passageways are separated by a member conductively connecting between the first surface 42 and the second surface 43 of the cooling jacket. The plurality of streamwise passageways are adjacent one another in the cooling jacket and are separated by the streamwise elongated pedestals.

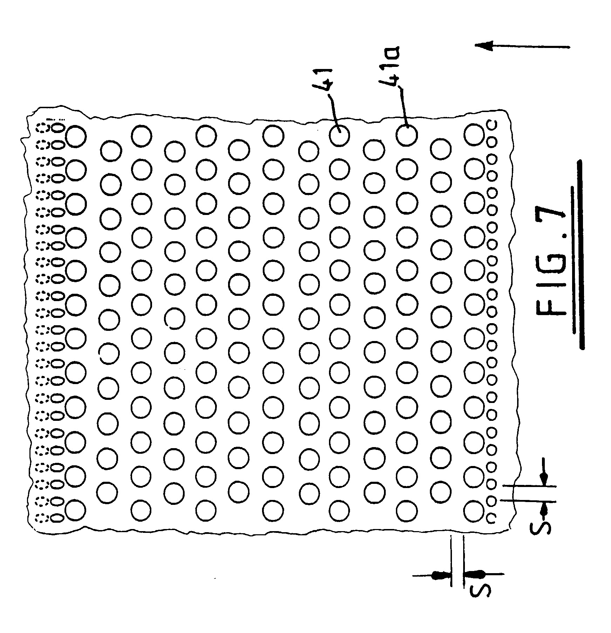

With reference to FIGS. 5 and 7, there is illustrated the plurality of cooling pedestals 41 that are disposed within the cooling jacket 30. In the preferred embodiment the plurality of pedestals 41 are aligned in rows extending spanwise within the cooling jacket 30, and the plurality of rows of pedestals 41 are spaced streamwise. The plurality of pedestals 41 forming an rectangular arrangement of rows and columns which can either be in line or staggered depending on the specific heat load and cooling flow requirements. In the preferred embodiment pedestals 41 have a substantially cylindrical shape, and their exterior surface 41a are subjected to the cooling media flow. In one form of the present invention the pedestals 41 having a width in the range of about .09-.015 inches, with the preferred width being about .036 inches. It is preferred that the ratio of the width of the pedestal 41 to the greater of the spanwise length and streamwise length of the airfoil is less than about .09. It is more preferred that the ratio of the width of the pedestal 41 to the greater of the spanwise length and streamwise length of the airfoil is about .019. In another form of the present invention the ratio of the width of the pedestal 41 to the greater of the spanwise length and streamwise length is greater than about .00375. It is understood that other pedestal width to streamwise or spanwise length of the airfoil ratios are within the contemplate of the present invention.

The spacing and number of cooling pedestals 41 affects the airfoil 16 heat transfer characteristics, and increases the turbulence of the cooling media passing through the cooling jacket. In one form of the present invention the cross sectional area of the plurality of pedestals is at least about 15 percent of the cross sectional area of the cooling jacket, and the passageways within the cooling jacket comprising at most about 85% of the cross sectional area of the cooling jacket. It is understood that each of the pedestals 41 could be solid or hollow, however in discussing the cross-sectional area of the pedestals, reference is made to the space that the pedestal covers on the respective surface of the cooling chamber. In a more preferred embodiment the cross sectional area of the plurality of pedestals is at least about 20 percent of the cross sectional area of the cooling jacket and the passageways within the cooling jacket comprising at most about 80% of the cross sectional area of the cooling jacket. In the most preferred embodiment the cross sectional area of the plurality of pedestals is about 25 percent of the cross sectional area of the cooling jacket, and the passageway within the cooling jacket comprising about 75% of the cross sectional area of the cooling jacket. The minimum distance 's' between cooling pedestals 41 is preferred to be greater than about .010 inches. A minimum height 't' between a first surface 42 and a second surface 43 of the first cooling jacket 30 is also greater than about .010 inches.

In the preferred embodiment the distance between the first surface 42 and the second surface 43 is substantially uniform. The minimum dimensions for 's' and 't' within the cooling chamber 30 is driven by clogability concerns. In the preferred embodiment the plurality of pedestals 41 have a uniform height and extend between the first surface 42 and the second surface 43 of the first cooling jacket 30. In an alternate embodiment it is contemplated that at least a portion of the plurality of cooling pedestals do not extend completely between the first surface 42 and the second surface 43 of the cooling jacket 30. Further, in an alternative form of the present invention a portion of the plurality of cooling pedestals have a varying height.

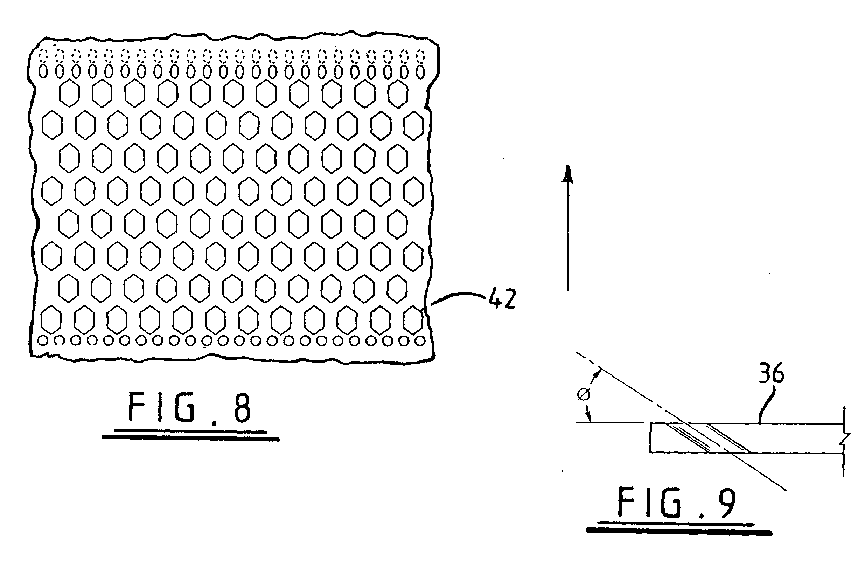

Another form of the present invention is illustrated in FIG. 8. The rounded edge diamond shaped pedestals 42, extend between the first surface 42 and the second surface 43, and have six surfaces that are exposed to the flow of the cooling media. Further, the plurality of cooling pedestals 42 are aligned in a plurality of staggered rows. Cooling pedestals that are elongated in the streamwise direction of the airfoil are contemplated, along with other geometric configurations, including for example, elliptical and polygonal. It is understood that the cooling pedestal could have any number of shapes provided it fulfills the required heat transfer characteristics of the present invention.

The exit apertures 26 formed in the first cooling chamber 30 are positioned at an acute angle Θ to the outer surface 36 of the airfoil 16 to allow the cooling media to exit along at least a portion of the outer surface 36 in the streamwise direction. (FIG. 9). In the most preferred embodiment the orientation of the exit apertures 26 aligns the apertures with the streamwise direction of the external flow. In another form of the present invention the exit apertures are positioned at a compound angle with respect to the direction of external flow. The orientation of the exit aperture relative to the external flow can be up to about ninety (90) degrees. In the preferred embodiment the acute angle Θ is within the range of about thirty to thirty-five degrees, with the most preferred angle being about 30 degrees. It is well known in the art to use an exit aperture inclined to the outer surface in this range of angles in the streamwise direction to provide fluid flow characteristics which enhance film cooling protection along the outer surface 36 of the airfoil 16. Cooling media escaping from the first cooling jacket 30 through the exit apertures 26 to the outer surface 36 function to reduce the surface heat load on the airfoil 16. In the preferred embodiment the exit apertures 26 are aligned in rows extending spanwise along the airfoil 16, and the rows of exit apertures 26 are spaced streamwise. Utilizing rows of exit apertures 26 to eject the cooling media onto the outer surface 36 of airfoil 16 maximizes the effectiveness of film cooling protection. In the preferred embodiment there are a pair of staggered rows of exit apertures 26.

In the second through sixth cooling jackets 31-35, the general construction and function of these cooling jackets 31-35 is virtually the same as the first cooling jacket 30 in most aspects. The significant distinctions between the first cooling jacket 30 and the second through sixth cooling jacket 31-35 are shown in the drawings and set forth below.

A second cooling jacket 31 is located proximate the leading edge 21 of the airfoil 16. A plurality of entrance apertures 37 allow the flow of cooling media from the hollow cavity 20 into the second cooling jacket 31, analogously to the first cooling jacket 30. The entrance apertures 37 being located streamwise proximate the stagnation region 15c of blade 15. The entrance apertures 37 are aligned in rows extending spanwise along the blade 15, and the rows are spaced streamwise. The cooling media being injected into the second cooling jacket 31 from the stagnation region 15c and flowing downstream to the exit apertures 26 formed within this cooling jacket. The flow of cooling media being in the direction of arrow Y' within the second cooling jacket 31, which direction corresponds generally to the flow of fluid on the outer surface 36 located adjacent this cooling jacket. In another form of the present invention it is contemplated that a short counter flow region could be located slightly downstream of the stagnation region 15c.

The design and construction of the second cooling jacket 31 provides for no significant film cooling protection along the outer surface 36 adjacent the second cooling jacket 31, and therefore the internal convective heat transfer within the second cooling jacket 31 must cool this region. This requirement to cool the portion of the airfoil proximate the second cooling jacket 31 without significant film cooling protection necessitates having a relatively short internal passageway. The cooling media within the second cooling jacket 31 being isolated from the first and third cooling jackets 30 and 32 by flow splitters 38. Further, the second cooling jacket 31 includes a plurality of pedestals 41 as disclosed for the first cooling jacket 30.

In the third cooling jacket 32 the cooling media enters through a plurality of cooling media entrance apertures 37 which are aligned in rows extending spanwise along the blade 15, and the rows are spaced streamwise. The entrance apertures 37 being formed upstream of the exit apertures 28 on the pressure side 24 of the airfoil 16. In the preferred embodiment the third cooling jacket 32 includes an internal passageway having a plurality of pedestals 41 as disclosed for the first cooling jacket 30. The cooling media flows within the third cooling jacket 32 in the direction of arrow Y", which is substantially aligned with the fluid flow on the outer surface 36 adjacent this region of the airfoil 16. The fourth cooling jacket 33 is separated from the third cooling jacket 32 and the fifth cooling jacket 14 by flow splitters 38. The design and construction of the fourth cooling jacket 33 is substantially the same as the third cooling jacket 32.

At the trailing end 22a of the airfoil 16 are formed the fifth and sixth cooling jackets 34 and 35. The fifth cooling jacket 34 is formed oil the pressure side 24 of the airfoil 16, and the sixth cooling jacket 35 is formed on the suction side 25 of the airfoil 16. Each of the cooling jackets 34 and 35 include three aligned rows of cooling media entrance apertures 37 extending spanwise along the blade 15, and the three rows are spaced streamwise. The flow of cooling media within the fifth and sixth cooling jacket 34 and 35 is substantially aligned with the direction of fluid flow on the outer surface 36 adjacent the respective cooling jackets. The cooling media exits the fifth and sixth cooling jackets 34 and 35 at the trailing edge 22 of the airfoil 16. Physical constraints regarding space necessitates that the fifth and sixth cooling jackets 34 and 35 do not allow the cooling media to flow counter to the fluid on the outer surface 36 of airfoil 16.

It is understood that within the preferred embodiment, the six cooling jackets 30-35 have cooling pedestals 41 in which the geometric shape, diameter, and spacing may vary to accommodate the local cooling load. The diameter and spacing of the pedestals 41 optimally vary between the chambers to meet the heat load and pressure drop requirements.

With reference to FIG. 6, there is illustrated one alternative of the present invention. The general construction and function of airfoil 116 is virtually the same as airfoil 16. The significant distinctions between airfoil 116 and airfoil 16 are set forth herein, and with reference to FIG. 6.

Referring to FIG. 6, there is illustrated a cross sectional view of airfoil 116 having nine (9) cooling jackets 130 through 138. A hollow cavity or passageway 20 provides a flow of cooling media within the turbine blade 115. The nine (9) cooling jackets 130 through 138 are formed along the perimeter of the airfoil 116 between the outer surface 36 and the interior surface 28. The plurality of cooling jackets 130 through 138 extend spanwise front the tip 23 to the platform 14 of blade 115.

The first cooling jacket 130 is located on the suction side 25 of airfoil 116 and is substantially the same as the first cooling jacket 30 of airfoil 16. A distinguishing feature between first cooling jacket 30 and the first cooling jacket 130 is that the streamwise length of cooling jacket 130 has been reduced. Further, on the suction side 25 of airfoil 116, a seventh cooling jacket 136 and an eighth cooling jacket 137 are formed. The seventh and eighth cooling jackets 136 and 137 are located adjacent the first cooling jacket 130. The seventh and eighth cooling jackets 136 and 137 are substantially the same as first cooling jacket 130. More particularly, the seventh and eighth cooling jackets 136 and 137 have the cooling media flowing within the respective cooling jacket in a direction counter to the flow of fluid on the outer surface 36 of the airfoil 116; the jackets have a plurality of cooling pedestals 41 positioned therein; and the cooling jackets have cooling media entrance apertures 37 and exit apertures 26. Further, the exit apertures 26 are formed closer than the cooling media entrance aperture 37 of the respective cooling jackets to the leading end 21a of the airfoil 116.

A second cooling jacket 131 is located at the leading end 21a of airfoil 116. The second cooling jacket 131 being substantially similar to the second cooling jacket 31 of airfoil 16. More particularly, the second cooling jacket 131 has the cooling media fed from the stagnation region and relies upon the convective heat transfer between the wall 39 and the cooling media to cool this portion of the airfoil 116. The second cooling jacket 131 having a plurality of cooling pedestals 41 therein, analogous to the cooling pedestals in the second cooling jacket 31. Cooling media flow is in the same direction as the fluid flow on the outer surface 36 and thus exits downstream of the outer surface 36 adjacent the second cooling jacket 131; providing no film cooling protection to the external surface of the cooling jacket 131.

The third cooling jacket 132 is positioned on the pressure side 24 of airfoil 116. The third cooling jacket 132 of airfoil 116 is substantially similar to the third cooling jacket 32 of airfoil 16. A fourth cooling jacket 133 is located on the pressure side 24 of the airfoil 116. The fourth cooling jacket has exit apertures 26 positioned closer than the cooling media entrance apertures 37 to the leading edge 21. The cooling media flow indicated by arrow K within the fourth cooling jacket 133 is substantially counter to the flow of fluid on the outer surface 36 of the airfoil 116. As previously discussed, with respect to first cooling jacket 30 of airfoil 16 the counter flow of cooling media insures that where the film cooling protection is minimal there is a maximum temperature differential between the wall 39 and the cooling media, and the film cooling protection is maximized where the temperature differential between the cooling media and the wall 39 is the smallest.

The fifth and sixth cooling jackets 134 and 135, are located respectively on the pressure and suction sides of airfoil 116. The fifth and sixth cooling jackets 134 and 135 are substantially similar to cooling jackets 34 and 35 of airfoil 16. A distinguishing structural difference is that the fifth cooling jacket 134 discharges a portion of the cooling media through an exit aperture 26 that is located upstream from the trailing edge 22 of airfoil 116. Further, the sixth cooling jacket 135 which is located on the suction side 25 of airfoil 116 discharges through an exit aperture 26 that is positioned at an acute angle Θ to the outer surface 36 of airfoil 116. Formed at the trailing end 22A of airfoil 116 is a ninth cooling jacket 138, which provides for the exit of cooling media at the trailing edge 122A of the airfoil 116.

In another form of the present invention the airfoil is substantially similar to the preferred embodiment with one exception. A hollow insert or impingement tube replaces the inner wall that comprises the inner surface 28 of the airfoil. The hollow insert is connected with the airfoil such that the plurality of pedestals conductively connects between the airfoil body and this hollow insert. The hollow insert being cast or formed of sheet metal defines the passageway 20 that delivers cooling media from the compressor to the cooling jackets within the airfoil. The entrance apertures, rods and rotated features disclosed in this application are formed on or connected to the impingement tube analogously to how they were connected or formed with the integrally cast wall that defines surface 28 in the preferred embodiment. The plurality of pedestals in this embodiment have one end integrally formed with the airfoil, and the opposite other end connected to the impingement tube.

While the invention has been illustrated and described in detail in the drawings and foregoing description, the same is to be considered as illustrative and not restrictive in character, it being understood that only the preferred embodiment has been shown and described and that all changes and modifications that come within the spirit of the invention are desired to be protected.

## Claims

1. An airfoil within a gas turbine engine, comprising:
a body, said body having an internal passageway for distributing cooling media within said body, and said body having an inner surface and an outer surface;
a plurality of cooling jackets, the plurality of cooling jackets disposed adjacent the inner surface of said body for receiving at least a portion of the the cooling media therein, at least one of said cooling jacket directing the flow of cooling media therein counter to fluid flow on the exterior surface of said body;
an exit aperture connecting with said at least one of said cooling jackets for allowing the escape of the cooling media from the cooling jacket to the exterior surface of the body; and
said at least one cooling jacket having a plurality of pedestals positioned within said cooling jacket for enhancing heat transfer between said body and the cooling media.

2. The airfoil of claim 1, wherein said airfoil is a cast alloy structure.

3. The airfoil of claim 2, wherein said airfoil is a single crystal alloy structure.

4. The airfoil of claim 3, which further includes a rod positioned within said internal passageway of said body, said rod connecting to said interior surface of said body.

5. The airfoil of claim 4, wherein said exit aperture is formed at an acute angle to the exterior surface of said body.

6. The airfoil of claim 5, wherein said exit aperture is formed at about a thirty degree angle to the exterior surface of said body.

7. The airfoil of claim 6, wherein said plurality of pedestals creating turbulence in the cooling media passing through said at least one cooling jacket.

8. The airfoil of claim 7, wherein each of said pedestals enhancing the conductive heat transfer of said airfoil.

9. The airfoil of claim 8, wherein said at least one cooling jacket having a spanwise row of exit apertures for allowing the escape of the cooling media to said exterior surface.

10. The airfoil of claim 9, wherein at lest a portion of said plurality of pedestals being in a spanwise row within said at least one cooling jacket.

11. The airfoil of claim 10, wherein said at least one cooling jacket having a plurality of spanwise rows of pedestals.

12. The airfoil of claim 11, wherein said plurality of spanwise rows of pedestals being staggered.

13. The airfoil of claim 12, which further includes an entrance aperture for receiving the flow of cooling media into said at least one cooling jacket substantially transverse to the flow of cooling media within said at least one cooling jacket.

14. The airfoil of claim 13, wherein said at least one cooling jacket further includes a plurality of entrance apertures positioned in a spanwise row for receiving cooling media into said at least one cooling jacket.

15. The airfoil of claim 14, wherein said plurality of pedestals are substantially cylindrical.

16. The airfoil of claim 15, wherein the ratio of the width of said pedestal to the greater of the spanwise length and streamwise length is less than about .09.

17. The airfoil of claim 15, wherein the ratio of the width of said pedestal to the greater of the spanwise length and streamwise length is about .019.

18. The airfoil of claim 15, wherein the ratio of the width of said pedestal to the greater of the spanwise length and streamwise length is greater than about .00375.

19. The airfoil of claim 17, wherein said plurality of pedestals having a uniform height within said cooling jacket.

20. The airfoil of claim 19, wherein said pedestals are conductively connected between an upper and lower surface of said cooling jacket.

21. The airfoil of claim 20, wherein said body includes six cooling jackets disposed adjacent the inner surface of said body.

22. The airfoil of claim 21, wherein at least one of said cooling jackets having a plurality of pedestals that are of a different geometric shape than said plurality of pedestals within said other cooling jacket.

23. The airfoil of claim 1 wherein at least a portion of said plurality of pedestals being aligned in a spanwise row within said cooling jacket.

24. The airfoil of claim 1, wherein at least a portion of said pedestals having a width of about .036 inches.

25. The airfoil of claim 24, wherein the spacing between the pedestals is greater than .010 inches.

26. The airfoil of claim 25, wherein said at least one cooling jacket having a plurality of rows of pedestals.

27. The airfoil of claim 26, wherein said plurality of rows of pedestals being staggered.

28. The airfoil of claim 27, wherein said plurality of pedestals being substantially cylindrical.

29. An airfoil utilizing cooling media to internally cool the airfoil and to reduce the surface heat load of the airfoil, comprising:
a body having a leading end and a trailing end, said body having a passageway therein for distributing the cooling media within said body, further said body having an interior surface and an exterior surface;
a plurality of passages positioned along at least a portion of the perimeter of said body, said passages positioned between said interior surface and said exterior surface;
each of said passages having an entrance aperture and an exit aperture, said entrance aperture connecting to said passageway for allowing the flow of cooling media into each of said passages, said exit aperture connecting said passage to said exterior surface for delivering the cooling media to said exterior surface, said entrance aperture spaced streamwise from said exit aperture; and
at least one of said passages having the exit aperture positioned closer than said entrance aperture to said leading end, whereby the cooling media flows within the passage counter to the fluid flow on the exterior surface;
at least one of said passages having a plurality of pathways for the cooling media to pass from said interior surface to said exterior surface, said different pathways being separated by a member conductively connecting between said inner and outer surface of said passageways.

30. The airfoil of claim 29, wherein said airfoil is a single crystal alloy structure.

31. The airfoil of claim 30, wherein said exit aperture being formed at an acute angle to the exterior surface of said body.

32. The airfoil of claim 31, which further includes a plurality of pedestals within said at least one passage.

33. The airfoil of claim 32, wherein at least a portion of said plurality of pedestals being staggered.

34. The airfoil of claim 33, wherein each of said plurality of passages further includes a plurality of entrance apertures for allowing cooling media into each of said plurality of passages.

35. The airfoil of claim 34, wherein said plurality of entrance apertures are positioned in spanwise rows.

36. The airfoil of claim 35, wherein said plurality of pedestals being substantially cylindrical.

37. A airfoil utilizing cooling media to internally cool the airfoil and reduce the surface heat load on the airfoil:
a body, said body having an internal pathway for delivering the cooling media within said body, said body having an inner surface and an outer surface;
cooling means positioned along at least a portion of the perimeter of said body adjacent the inner surface of said body for receiving cooling media from said pathway, said cooling means for directing the flow of cooling media counter to the fluid flow on the outer surface of the body;
an exit aperture connecting to said cooling means, said exit aperture for ejecting the cooling media onto the outer surface of the body; and
said cooling means having a plurality pedestals positioned within said cooling means for increasing the heat transfer between said body and the cooling media.

38. The airfoil of claim 37, wherein said airfoil being a single crystal structure.

39. The airfoil of claim 38, wherein said exit aperture being formed at an acute angle to the exterior surface of said body.

40. The airfoil of claim 39, wherein said plurality of pedestals forming an arrangement of rows and columns.

41. The airfoil of claim 40, wherein said cooling means further includes a plurality of entrance apertures for allowing cooling media into said cooling means.

42. The airfoil of claim 41, wherein said plurality of pedestals being substantially cylindrical.

43. The airfoil of claim 42, wherein said pedestals are conductively connected to said body.

44. In combination:
a gas turbine engine; and
an airfoil within said engine, comprising:
a body, said body having an internal passageway for distributing cooling media within said body, and said body having an inner surface and an outer surface;
at least one cooling jacket disposed adjacent the inner surface of said body for receiving at least a portion of the the cooling media therein, said cooling jacket directing the flow of cooling media counter to the fluid flow on the exterior surface of said body;
an exit aperture connecting with said cooling jacket for allowing the escape of the cooling media from the cooling jacket to the exterior surface of the body; and
said at least one cooling jacket having a plurality of pedestals positioned within said cooling jacket for increasing heat transfer between said body and the cooling media.

45. The airfoil of claim 44, wherein said airfoil is a single crystal structure.

46. In combination:
a gas turbine engine ; and
an airfoil within said engine, comprising:
a body, said body having an internal passageway for distributing cooling media within said body, and said body having an inner surface and an outer surface;
at least one cooling jacket disposed adjacent the inner surface of said body for receiving at least a portion of the the cooling media therein, said cooling jacket directing the flow of cooling media counter to fluid flow on the exterior surface of said body;
an exit aperture connecting with said cooling jacket for allowing the escape of the cooling media from the cooling jacket to the exterior surface of the body; and
said at least one cooling jacket having a plurality of pedestals positioned within said cooling jacket for enhancing heat transfer between said body and the cooling media, said plurality of pedestals covering about fifteen percent of the cross sectional area of said at least one cooling jacket.

47. The airfoil of claim 42, wherein said plurality of pedestals covering about twenty percent of the cross sectional area of said at least one cooling jacket.

48. The airfoil of claim 47, wherein said plurality of pedestals covering about twenty-five percent of the cross sectional area of said at least one cooling jacket.
